# EUROPEAN PATENT APPLICATION

(11) **EP 3 382 448 A1**
(43) Date of publication of application: **03.10.2018**
(21) Application number: 17163653.3
(22) Date of filing: 29.03.2017
(51) Int. Cl.: G02F 1/13357

(54) **DISPLAY APPARATUS**

(71) Applicant: Vestel Elektronik Sanayi ve Ticaret A.S., 45030 Manisa (TR)
(72) Inventor: ERDÍNÇ, Cihan, 45030 Manisa (TR); USLU, Mutlu, 45030 Manisa (TR)
(74) Representative: Flint, Adam

(57) **Abstract**

A display apparatus, comprising: one or more electro-optic devices for controlling the transmission of light of one or more light sources (14) out from an emission area (10); wherein the display apparatus further comprises one or more photovoltaic devices (26) located laterally outside the emission area (10) for receiving a portion of the light from said one or more light sources (14).

## Description

### Technical Field

The present disclosure relates to display apparatus that operates by controlling the transmission of light from one or more light sources out from an emission area.

### Background

Some types of display apparatus such as e.g. transmissive-LCD operate by controlling the transmission out from an emission area of light from a rear light source. The light source typically emits light in both a direction towards the viewer and a direction away from the viewer; and may for example, comprise lamps (e.g. cold cathode fluorescent lamps (CCFL)) within the emission area or a combination of lamps outside the emission area and a light guide plate (LGP) within the emission area to propagate light across the emission area and release light in a direction towards the viewer from within the emission area.

US20110069238 describes a technique involving providing an amorphous silicon solar panel on the opposite side of a light source to a liquid crystal display (LCD) module to convert light emitted from the light source in a direction away from the LCD module into electrical energy.

The inventors for the present application have identified that this kind of technique can lead to an undesirable reduction in the homogeneity of the light source and shadowing effects in the output of the display apparatus. The inventors for the present application have identified the aim of providing an energy harnessing technique with less undesirable side-effects.

### Summary

There is hereby provided a display apparatus, comprising: one or more electro-optic devices for controlling the transmission of light of one or more light sources out from an emission area; wherein the display apparatus further comprises one or more photovoltaic devices located laterally outside the emission area for receiving a portion of the light from said one or more light sources.

According to one embodiment, said one or more light sources comprise one or more light emitting devices located beyond at least one lateral edge of the emission area, and at least one light guide for propagating light from the one or more light emitting devices across the emission area and releasing a portion of the propagating light towards the one or more electro-optic devices; and wherein the one or more photovoltaic devices comprise one or more photovoltaic devices located beyond an opposite lateral edge of the emission area for receiving light propagating completely across the emission area.

According to one embodiment, the apparatus further comprises a reflector on the opposite side of the light guide to the one or more electro-optic devices, for redirecting back towards the one or more optic devices any light released from the light guide in a direction away from the one or more electro-optic devices.

According to one embodiment, the apparatus further comprises a housing with side walls extending in a direction substantially perpendicular to the emission area, and wherein the one or more light sources comprise one or more light-emitting devices mounted on at least a first side wall, and said one or more photovoltaic devices comprise one or more photovoltaic devices mounted on at least a second side wall opposite to said first side wall.

According to one embodiment, the one or more light-emitting devices comprise one or more light-emitting diodes (LEDs).

According to one embodiment, the one or more electro-optic devices comprises a liquid crystal medium, and an array of electronic switching devices for controlling one or more optical properties of respective areas of the liquid crystal medium.

According to one embodiment, the apparatus further comprises circuitry for storing electrical energy generated by the one or more photovoltaic devices in one or more batteries, and circuitry for using electrical energy from said one or more batteries for standby operation of the display apparatus.

There is also hereby provided a method of operating a display apparatus comprising one or more electro-optic devices for controlling the transmission of light of one or more light sources out from an emission area; wherein the method comprises operating the display apparatus in a standby mode using electrical energy generated by one or more photovoltaic devices located laterally outside the emission area for receiving a portion of the light from said one or more light sources.

According to one embodiment of the method, said one or more light sources comprise one or more light emitting devices located beyond at least one lateral edge of the emission area, and at least one light guide for propagating light from the one or more light emitting devices across the emission area and releasing a portion of the propagating light towards the one or more electro-optic devices; and wherein the one or more photovoltaic devices comprise one or more photovoltaic devices located beyond an opposite lateral edge of the emission area for receiving light propagating completely across the emission area.

According to one embodiment of the method, the display apparatus further comprises a reflector on the opposite side of the light guide to the one or more electro-optic devices, for redirecting back towards the one or more optic devices any light released from the light guide in a direction away from the one or more electro-optic devices.

According to one embodiment of the method, the display apparatus further comprises a housing with side walls extending in a direction substantially perpendicular to the emission area, and wherein the one or more light sources comprise one or more light-emitting devices mounted on at least a first side wall, and said one or more photovoltaic devices comprise one or more photovoltaic devices mounted on at least a second side wall opposite to said first side wall.

According to one embodiment of the method, the one or more light-emitting devices comprise one or more light-emitting diodes (LEDs).

According to one embodiment of the method, the one or more electro-optic devices comprises a liquid crystal medium, and an array of electronic switching devices for controlling one or more optical properties of respective areas of the liquid crystal medium.

According to one embodiment of the method, the display apparatus further comprises circuitry for storing electrical energy generated by the one or more photovoltaic devices in one or more batteries, and circuitry for using electrical energy from said one or more batteries for standby operation of the display apparatus.

### Brief Description of the Drawings

To assist understanding of the present disclosure and to show how embodiments may be put into effect, reference is made by way of example to the accompanying drawings in which:
Figure 1 shows a plan, front view of an apparatus according to an embodiment of the present invention;
Figure 2 shows a cross-sectional view of an apparatus according to an embodiment of the present invention;
Figure 3 shows a more detailed cross-sectional view of part of the apparatus of Figure 2; and
Figure 4 schematically shows circuitry for use with an embodiment of the present invention.

### Detailed Description

An embodiment of the present invention is described in detail hereunder for the example of a flat panel display apparatus employing an edge-lit backlight module as the light source, but the same technique can be used with other types of light sources. Similarly, the embodiment is described for the example of a thin-film-transistor liquid crystal display (TFT-LCD), but the same technique can also be used with other types of displays using light sources.

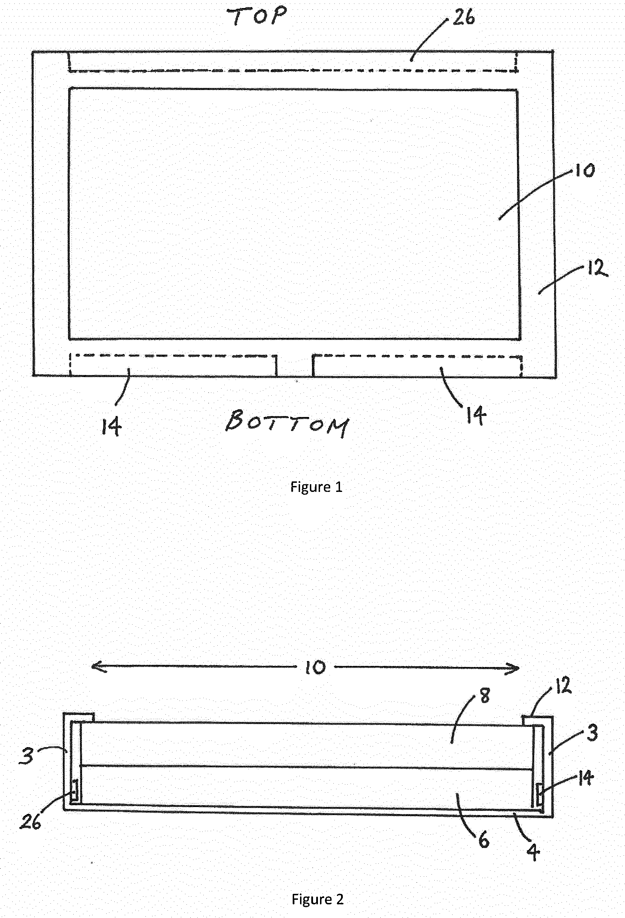

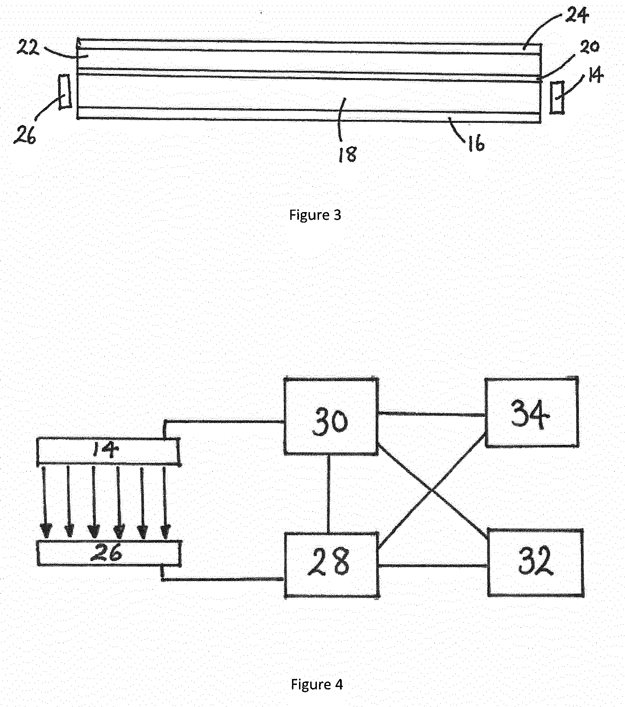

With reference to Figures 1 to 3, a display apparatus according to an example embodiment of the present invention comprises a housing 2 including a support structure 4 supporting at least a back-light system 6 and a TFT-LCD module 8. As discussed below, the support structure 4 also supports photovoltaic cells and control circuitry.

The TFT-LCD module 8 may, for example, be any conventional TFT-LCD module including at least a liquid crystal material contained between two components uniformly spaced apart by a predetermined distance, and an array of thin-film-transistors (TFTs) for individually controlling an optical property of pixel portions of the liquid crystal material, whereby the degree to which the liquid crystal material transmits light from the backlight system 6 can be electrically controlled for each pixel portion. The TFT-LCD module 8 defines an emission area 10 from which light is emitted via the liquid crystal material under the control of the TFT array. The housing 2 includes a bezel portion 12 which frames the emission area 10 and hides parts of the apparatus outside the emission area.

The backlight system 6 includes LED bars 14 mounted on a side wall 3 of the housing 2 at the edge of the display apparatus that is the bottom edge when the display apparatus is in use. The backlight system 6 also includes a stack of elements extending across at least the whole of the emission area 10.

In order of remoteness from the TFT-LCD module, the stack of elements comprises: (i) a reflector sheet 16 (most remote from the TFT-LCD module); (ii) light guide plate (LGP) 18; (iii) a diffuser sheet 20; (iv) a prism sheet 22; and a reflective polariser 24 (closest to the TFT-LCD module 8).

The LED bars 14 are aligned with one or more lateral edges of the LGP 18. In use, light emitted from the LED bars 14 propagates in a direction parallel to the plane of the LGP 18 by the mechanism of total internal reflection (TIR). The top and/or bottom surfaces of the LGP 18 includes microstructures (not shown) across the whole of the emission area. These microstructures are designed to frustrate TIR and release a portion of the light propagating through the LGP out of the LGP.

Light emerges from the LGP 18 in a direction towards the TFT-LCD module and a direction away from the TFT-LCD module. Light emerging from the LGP 18 in a direction away from the TFT-LCD module is reflected by the reflector sheet 16 back through the LGP 18 and towards the TFT-LCD module.

The diffuser sheet 20 increases the uniformity of distribution of light by a scattering mechanism; and the prism sheet 22 increases the proportion of light propagating in a direction substantially perpendicular to the plane of the TFT-LCD module.

The reflective polariser selectively transmits light having the right polarisation for the TFT-LCD module (i.e. light having a polarisation that is transmitted by the rear polariser of the TFT-LCD module), and reflects light having any other polarisation for recycling.

One or more photovoltaic devices 26 are mounted on the housing side wall opposite to the housing side wall on which the LED bars 14 are mounted. The active elements of the one or more photovoltaic devices 26 are aligned with a lateral edge of the LGP 18, to best receive light propagating all the way across the emission area from the LED bars 14.

When the display apparatus is on and the LED bars 14 are emitting light, the electrical energy generated by the photovoltaic devices is fed to a charge controller 28. The charge controller 28 regulates the voltage generated by the photovoltaic devices to a required voltage level for the main board 30 in standby mode, and stored in battery 32. The functions of the main board 30 include e.g. controlling the TFT-LCD module based on video signals from one or more inputs, and processing user operations in standby mode, such as processing signals from a remote control unit.

When e.g. a user of the display apparatus activates a standby mode switch, a standby signal is sent from the main board 30 to the charge controller 28, and the charge controller 28 sends a control signal disabling the power board 34. The power board 34 functions to generate the voltages required for operation of the e.g. TFT-LCD module and backlight module from the ac power input voltage. The battery 32 then provides all necessary power for the main board 30 in standby mode; the main board 30 takes no power from the power board 34 in standby mode.

The above-described display apparatus may comprise additional components other than those described above. For example, the above-described display apparatus may form part of a television set including e.g. a radio receiver for extracting video and audio signals from broadcast TV radio transmissions.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display apparatus, comprising: one or more electro-optic devices for controlling the transmission of light of one or more light sources out from an emission area; wherein the display apparatus further comprises one or more photovoltaic devices located laterally outside the emission area for receiving a portion of the light from said one or more light sources.

2. A display apparatus according to claim 1, wherein said one or more light sources comprise one or more light emitting devices located beyond at least one lateral edge of the emission area, and at least one light guide for propagating light from the one or more light emitting devices across the emission area and releasing a portion of the propagating light towards the one or more electro-optic devices; and wherein the one or more photovoltaic devices comprise one or more photovoltaic devices located beyond an opposite lateral edge of the emission area for receiving light propagating completely across the emission area.

3. A display apparatus according to claim 2, further comprising a reflector on the opposite side of the light guide to the one or more electro-optic devices, for redirecting back towards the one or more optic devices any light released from the light guide in a direction away from the one or more electro-optic devices.

4. A display apparatus according to any preceding claim, further comprising a housing with side walls extending in a direction substantially perpendicular to the emission area, and wherein the one or more light sources comprise one or more light-emitting devices mounted on at least a first side wall, and said one or more photovoltaic devices comprise one or more photovoltaic devices mounted on at least a second side wall opposite to said first side wall.

5. A display apparatus according to any of claims 2 to 4, wherein the one or more light-emitting devices comprise one or more light-emitting diodes (LEDs).

6. A display apparatus according to any preceding claim, wherein the one or more electro-optic devices comprises a liquid crystal medium, and an array of electronic switching devices for controlling one or more optical properties of respective areas of the liquid crystal medium.

7. A display apparatus according to any preceding claim, further comprising circuitry for storing electrical energy generated by the one or more photovoltaic devices in one or more batteries, and circuitry for using electrical energy from said one or more batteries for standby operation of the display apparatus.

8. A method of operating a display apparatus comprising one or more electro-optic devices for controlling the transmission of light of one or more light sources out from an emission area; wherein the method comprises operating the display apparatus in a standby mode using electrical energy generated by one or more photovoltaic devices located laterally outside the emission area for receiving a portion of the light from said one or more light sources.

9. A method according to claim 8, wherein said one or more light sources comprise one or more light emitting devices located beyond at least one lateral edge of the emission area, and at least one light guide for propagating light from the one or more light emitting devices across the emission area and releasing a portion of the propagating light towards the one or more electro-optic devices; and wherein the one or more photovoltaic devices comprise one or more photovoltaic devices located beyond an opposite lateral edge of the emission area for receiving light propagating completely across the emission area.

10. A method according to claim 9, wherein the display apparatus further comprises a reflector on the opposite side of the light guide to the one or more electro-optic devices, for redirecting back towards the one or more optic devices any light released from the light guide in a direction away from the one or more electro-optic devices.

11. A method according to any of claims 8 to 10, wherein the display apparatus further comprises a housing with side walls extending in a direction substantially perpendicular to the emission area, and wherein the one or more light sources comprise one or more light-emitting devices mounted on at least a first side wall, and said one or more photovoltaic devices comprise one or more photovoltaic devices mounted on at least a second side wall opposite to said first side wall.

12. A method according to any of claims 9 to 13, wherein the one or more light-emitting devices comprise one or more light-emitting diodes (LEDs).

13. A method according to any of claims 8 to 12, wherein the one or more electro-optic devices comprises a liquid crystal medium, and an array of electronic switching devices for controlling one or more optical properties of respective areas of the liquid crystal medium.

14. A method according to any of claims 8 to 13, wherein the display apparatus further comprises circuitry for storing electrical energy generated by the one or more photovoltaic devices in one or more batteries, and circuitry for using electrical energy from said one or more batteries for standby operation of the display apparatus.
